# EUROPEAN PATENT APPLICATION

(11) **EP 4 841 185 A1**
(43) Date of publication of application: **18.11.2026**
(21) Application number: 26750014.8
(22) Date of filing: 05.02.2026
(51) Int. Cl.: F25B 41/40, B23K 1/00, B23K 1/19, B23K 33/00, F24F 1/32, F25B 1/00

(54) **REFRIGERANT PIPING, REFRIGERATION DEVICE, AND METHOD FOR BRAZING REFRIGERANT PIPING**

(30) Priority: 10.03.2025 JP 2025037321
(71) Applicant: Daikin Industries, Ltd., Osaka-shi, Osaka 530-0001 (JP)
(72) Inventor: ONO, Asahi, Osaka-shi, Osaka 530-0001 (JP); ASHIDA, Keishi, Osaka-shi, Osaka 530-0001 (JP); KOIKE, Fumiaki, Osaka-shi, Osaka 530-0001 (JP)
(74) Representative: Hoffmann Eitle
(86) International application number: PCT/JP2026/004137
(87) International publication number: WO 2026/191411

(57) **Abstract**

A refrigerant pipe 110 is a refrigerant pipe 110 that constitutes a refrigerant circuit 103 of a refrigeration apparatus 100 and through which a single refrigerant consisting of carbon dioxide or a mixed refrigerant containing carbon dioxide flows. The refrigerant pipe 110 includes a first pipe 111 made of stainless steel and having a first end 113, a second pipe 112 made of stainless steel and having a second end 114, a first connection portion 10 made of a material other than stainless steel having a tensile strength smaller than a tensile strength of stainless steel and joined to the first end 113, and a second connection portion 20 made of the material other than stainless steel and joined to the second end 114. The refrigerant pipe 110 according to the present embodiment includes the connection portion 120 that connects the first pipe 111 and the second pipe 112, and the reinforcing member 30 disposed on the outer peripheral surface 123 of the connection portion 120.

## Description

### TECHNICAL FIELD

The present disclosure relates to a refrigerant pipe, a refrigeration apparatus, and a method of brazing a refrigerant pipe.

### BACKGROUND ART

Conventionally, a refrigerant pipe made of stainless steel in which stainless steel pipes are connected to each other has been known (see PATENT LITERATURE 1). In general, a refrigerant pipe made of stainless steel is connected by brazing in a furnace by using a furnace installed in a factory or the like, and it is difficult to manually braze the refrigerant pipe at an installation site or the like of a refrigeration apparatus. In the refrigerant pipe of PATENT LITERATURE 1, a copper joint is provided at a connection portion between the stainless steel pipes and the copper joints are brazed to each other so as to enable manual brazing between the stainless steel pipes.

### CITATION LIST

### [PATENT LITERATURE]

PATENT LITERATURE 1: Japanese Laid-Open Patent Publication No. 2024-513318

### SUMMARY OF THE INVENTION

### [TECHNICAL PROBLEM]

However, in the refrigerant pipe in which stainless steel pipes are connected to each other via the copper joint, the connection portion by the copper joint has a lower pressure resistance strength than the stainless steel pipes. It is therefore difficult for the conventional refrigerant pipe made of stainless steel to secure the pressure resistance strength that can be used for a high-pressure refrigerant such as a single refrigerant made of carbon dioxide or a mixed refrigerant containing carbon dioxide.

An object of the present disclosure is to secure pressure resistance strength of a refrigerant pipe made of stainless steel capable of using a high pressure refrigerant such as a single refrigerant made of carbon dioxide or a mixed refrigerant containing carbon dioxide.

### [SOLUTION TO PROBLEM]

(1) A refrigerant pipe of the present disclosure is a refrigerant pipe that constitutes a refrigerant circuit of a refrigeration apparatus and through which a single refrigerant consisting of carbon dioxide or a mixed refrigerant including carbon dioxide flows, the refrigerant pipe including a first pipe made of stainless steel and having a first end, a second pipe made of stainless steel and having a second end, a connection portion that includes a first connection portion made of a material other than stainless steel, having a tensile strength lower than that of stainless steel, and joined to the first end and a second connection portion made of copper and joined to the second end, and connects the first end and the second end, and a reinforcing member disposed on an outer peripheral surface of the connection portion.
   In the refrigerant pipe of the present disclosure, pressure resistance strength of the connection portion can be improved by the reinforcing member. Accordingly, the refrigerant pipe of the present disclosure can secure the pressure resistance strength of a stainless steel refrigerant pipe capable of using a high-pressure refrigerant such as a single refrigerant made of carbon dioxide or a mixed refrigerant containing carbon dioxide.
(2) In the refrigerant pipe according to (1) of the present disclosure, the connection portion preferably includes a first portion that overlaps the first pipe or the second pipe in a radial direction, and a second portion that extends from the first portion in the axial direction and does not overlap the first pipe and the second pipe in the radial direction, and the reinforcing member is preferably disposed on the outer peripheral surface of the second portion.
   The refrigerant pipe having the above configuration can improve the pressure resistance strength of the second portion that does not overlap the first pipe or the second pipe in the radial direction and has low pressure resistance strength.
(3) In the refrigerant pipe according to (2) of the present disclosure, the first connection portion and the second connection portion are preferably made of copper, and an axial length of the second portion preferably is larger than an axial length of the first portion.
   The second portion made of copper has a function of fixing a brazing material that has entered the pipe. In the refrigerant pipe of the present disclosure, the axial length of the second portion is larger than the axial length of the first portion. Thus, the brazing material that has entered the refrigerant pipe can be fixed to the second portion.
(4) In the refrigerant pipe according to the aspect (2) of the present disclosure, the first connection portion and the second connection portion are preferably made of copper, and a thickness of the second portion in the radial direction is preferably equal to or less than a thickness of the first pipe and the second pipe in the radial direction.
   In the refrigerant pipe having the above configuration, the connection portion including the second portion can be constituted by a thin copper pipe. In this case, it is possible to secure the pressure resistance strength of the connection portion while using an inexpensive thin copper pipe. As a result, a cost of the refrigerant pipe having improved pressure resistance strength can be suppressed.
(5) In the refrigerant pipe according to the aspect (3) of the present disclosure, in the first pipe, preferably, the first end is open toward one side in the axial direction, in the second pipe, the second end is open toward another side in the axial direction, the first connection portion includes the second portion extending from the first portion to the one side in the axial direction, and an inner peripheral surface on the one side in the axial direction of the first connection portion and the outer peripheral surface on the another side in the axial direction of the second connection portion are joined by the brazing material.
   In the refrigerant pipe having the above configuration, in the refrigerant pipe, the brazing material that has entered the refrigerant pipe from between the inner peripheral surface on the one side in the axial direction of the first connection portion and the outer peripheral surface on the other side in the axial direction of the second connection portion can be fixed to the second portion. Accordingly, it is possible to prevent the brazing material that has entered the refrigerant pipe from reaching the first pipe and the second pipe made of stainless steel.
(6) In the refrigerant pipe according to any of the aspects (1) to (5) of the present disclosure, the first connection portion preferably includes a flared portion formed at an end on the one side in the axial direction, and the second connection portion is preferably connected to the flared portion.
   In the refrigerant pipe having the above configuration, when the second connection portion is connected to the first connection portion, the second connection portion can be positioned by the flared portion.
(7) In the refrigerant pipe according to any of the aspects (1) to (6) of the present disclosure, the reinforcing member is preferably made of metal and brazed to the first connection portion.
   In the refrigerant pipe of the present disclosure, pressure resistance strength of the connection portion can be improved by the reinforcing member. Accordingly, the refrigerant pipe of the present disclosure can secure the pressure resistance strength of a stainless steel refrigerant pipe capable of using a high-pressure refrigerant such as a single refrigerant made of carbon dioxide or a mixed refrigerant containing carbon dioxide.
(8) In the refrigerant pipe according to the aspect (7) of the present disclosure, the reinforcing member is preferably made of stainless steel.
   In the refrigerant pipe of the present disclosure, the pressure resistance strength of the reinforcing member can be secured, and accordingly, the pressure resistance strength of the connection portion can be improved.
(9) A refrigeration apparatus of the present disclosure includes the refrigerant pipe according to any of aspects (1) to (8).
   The refrigeration apparatus of the present disclosure can use a high-pressure refrigerant such as a single refrigerant made of carbon dioxide or a mixed refrigerant containing carbon dioxide by using the refrigerant pipe in which the pressure resistance strength of the connection portion is improved by the reinforcing member.
(10) A method of brazing a refrigerant pipe of the present disclosure is a method of brazing a refrigerant pipe including a first pipe made of stainless steel and having a first end, a second pipe made of stainless steel and having a second end, a connection portion that includes a first connection portion made of a material other than stainless steel having a tensile strength smaller than a tensile strength of stainless steel and joined to the first end and a second connection portion made of the material other than stainless steel and joined to the second end, and connects the first end and the second end, and a reinforcing member disposed on an outer peripheral surface of the connection portion, in which the connection portion includes a first portion that overlaps the first pipe in a radial direction, and a second portion that extends upward from the first portion and does not overlap the first pipe and the second pipe in the radial direction, an axial length of the second portion is larger than an axial length of the first portion, and the method includes brazing an inner peripheral surface of an upper end of the first connection portion and an outer peripheral surface of a lower end of the second connection portion in a state where the first pipe is disposed in an orientation in which the first end faces upward and the second pipe is disposed in an orientation in which the second end faces downward.

In the method of brazing the refrigerant pipe of the present disclosure, it is possible to manually braze the refrigerant pipe made of stainless steel in which the pressure resistance strength capable of using a high-pressure refrigerant such as a single refrigerant made of carbon dioxide or a mixed refrigerant containing carbon dioxide is secured. The method of brazing the refrigerant pipe of the present disclosure can prevent, by the second portion, the brazing material that has entered the refrigerant pipe from reaching the first pipe and the second pipe made of stainless steel.

### BRIEF DESCRIPTION OF DRAWINGS

[FIG. 1] FIG. 1 is a schematic diagram of a refrigeration apparatus according to an embodiment of the present disclosure.
[FIG. 2] FIG. 2 is a schematic sectional view illustrating a connection portion of a refrigerant pipe according to an embodiment of the present disclosure.
[FIG. 3] FIG. 3 is a schematic sectional view generally illustrating a first pipe and a first connection portion of the refrigerant pipe according to the embodiment of the present disclosure.
[FIG. 4] FIG. 4 is a schematic sectional view generally illustrating a second pipe and a second connection portion of the refrigerant pipe according to the embodiment of the present disclosure.
[FIG. 5] FIG. 5 is a schematic sectional view generally illustrating a status (during brazing) of the connection portion of the refrigerant pipe according to the embodiment of the present disclosure.

### DETAILED DESCRIPTION

Hereinafter, a refrigerant pipe of the present disclosure and a refrigeration apparatus including the refrigerant pipe will be described in detail with reference to the accompanying drawings. Note that the present disclosure should not be limited to the following exemplifications, and is intended to be illustrated by the claims and include meanings equivalent to the claims and any modification recited in the claims.

### [Overall configuration of refrigeration apparatus]

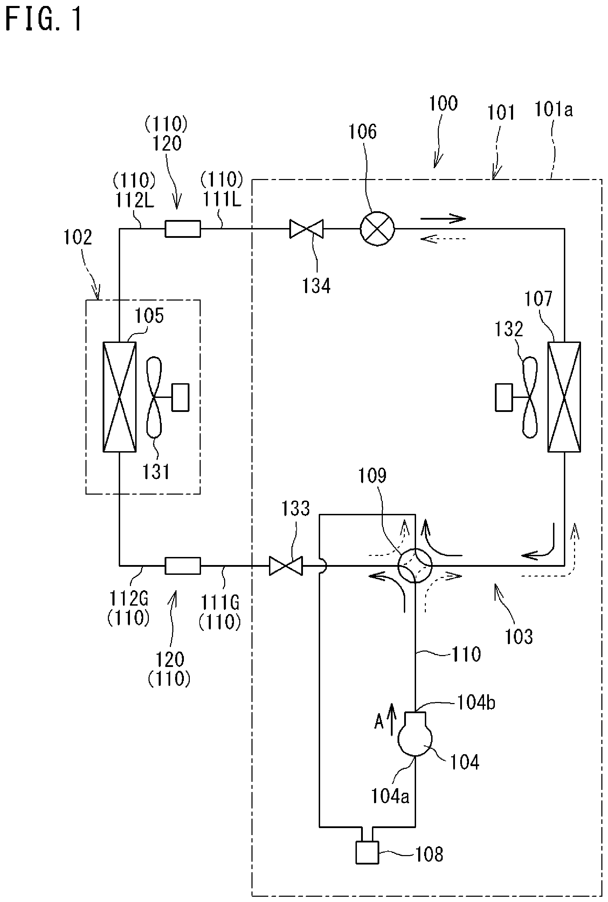

FIG. 1 is a schematic diagram of a refrigeration apparatus according to an embodiment of the present disclosure. A refrigeration apparatus 100 according to the present embodiment is an air conditioner that adjusts temperature and humidity in an air-conditioned room by a vapor compression refrigeration cycle. The refrigeration apparatus 100 includes an outdoor unit 101 installed outside the room, and an indoor unit 102 installed in the room. The outdoor unit 101 and the indoor unit 102 are connected to each other by a refrigerant pipe 110. Note that although the present embodiment exemplifies the refrigeration apparatus 100 including one indoor unit 102, the refrigeration apparatus 100 of the present disclosure may include two or more indoor units 102. The refrigeration apparatus 100 according to the present embodiment is an air conditioner, but the refrigeration apparatus of the present disclosure is not limited to the air conditioner, and may be a refrigerator, a freezer, a hot water supplier, or the like.

The refrigeration apparatus 100 includes a refrigerant circuit 103 that executes a vapor compression refrigeration cycle. The refrigerant circuit 103 includes a plurality of element components and a refrigerant pipe 110 connecting the plurality of element components. The refrigerant pipe 110 includes a connection portion 120. Note that the configuration of the connection portion 120 will be described later in detail.

The refrigerant circuit 103 includes, as the plurality of element components, a compressor 104 that compresses a refrigerant to generate a high-temperature and high-pressure gas refrigerant, a plurality of indoor heat exchangers 105, an expansion valve 106 that decompresses the refrigerant, an outdoor heat exchanger 107, an accumulator 108, a four-way switching valve 109, and the like, which are connected by the refrigerant pipe 110.

The refrigeration apparatus 100 of the present disclosure uses, as the refrigerant, a single refrigerant made of carbon dioxide or a mixed refrigerant containing carbon dioxide (so-called natural refrigerant). The refrigerant flowing in the refrigerant circuit 103 has a pressure of 4.0 MPa or more (for example, about 8 to 14 MPa). Therefore, the refrigerant pipe 110 used in the refrigeration apparatus 100 has strength enough to withstand a pressure of 4.0 MPa or more. The refrigerant pipe 110 used in the refrigeration apparatus 100 is mostly made of stainless steel, and partially includes a portion other than the portion made of stainless steel (for example, copper). Therefore, the refrigerant pipe 110 of the present disclosure has higher pressure resistance strength than a refrigerant pipe used in a refrigerant circuit using a refrigerant such as R32 or R410A. The stainless steel used for the refrigerant pipe 110 according to the present embodiment is austenitic stainless steel such as SUS304 or SUS304L, or ferritic stainless steel such as SUS430, SUS436L, or SUS444. In the present embodiment, most (substantially all) of the refrigerant pipe 110 constituting the refrigerant circuit 103 is made of stainless steel. However, in the refrigeration apparatus 100 of the present disclosure, a part of the refrigerant pipe 110 constituting the refrigerant circuit 103 may be made of stainless steel.

The compressor 104 compresses a low-pressure gas refrigerant and discharges a high-pressure gas refrigerant. The compressor 104 has a suction port or a suction portion 104a and a discharge port or a discharge portion 104b. The low-pressure gas refrigerant is sucked through the suction portion 104a. The high-pressure gas refrigerant is discharged from the discharge portion 104b in a direction of arrow A. Examples of the compressor 104 include various compressors such as a scroll compressor. The compressor 104 is housed in a casing 101a of the outdoor unit 101. The accumulator 108 is provided on the refrigerant pipe 110 on a suction side of the compressor 104.

The indoor heat exchanger 105 is provided in the indoor unit 102 and executes heat exchange between the refrigerant and indoor air. Examples of the indoor heat exchanger 105 include a fin-and-tube heat exchanger of a cross-fin type and a heat exchanger of a microchannel type. An indoor fan 131 is disposed near the indoor heat exchanger 105. The indoor fan 131 blows the indoor air to the indoor heat exchanger 105 and sends conditioned air into the room.

The expansion valve 106 is disposed in the refrigerant pipe 110 between the outdoor heat exchanger 107 and the indoor heat exchanger 105. The expansion valve 106 expands the passing refrigerant to decompress the refrigerant to a predetermined pressure. The expansion valve 106 according to the present embodiment is an electronic expansion valve.

The outdoor heat exchanger 107 executes heat exchange between the refrigerant and outdoor air. Examples of the outdoor heat exchanger 107 include a fin-and-tube heat exchanger of a cross-fin type and a heat exchanger of a microchannel type. An outdoor fan 132 is disposed near the outdoor heat exchanger 107. The outdoor fan 132 blows the outdoor air to the outdoor heat exchanger 107.

The refrigerant pipe 110 is provided with the four-way switching valve 109 for switching a refrigerant flow path, a gas shutoff valve 133, and a liquid shutoff valve 134. By switching the four-way switching valve 109, the refrigeration apparatus 100 can reverse a flow of the refrigerant, and switch the refrigerant discharged from the compressor 104 to be supplied to the outdoor heat exchanger 107 or the indoor heat exchanger 105, and thus an operation can be switched between a cooling operation and a heating operation.

The gas shutoff valve 133 and the liquid shutoff valve 134 open or close a refrigerant path. The opening and closing are performed manually, for example. When the refrigeration apparatus 100 is installed, the gas shutoff valve 133 and the liquid shutoff valve 134 are closed to prevent the refrigerant enclosed in the outdoor unit 101 from leaking outside, for example. On the other hand, when the refrigeration apparatus 100 is used, the gas shutoff valve 133 and the liquid shutoff valve 134 are opened.

During the heating operation of the refrigeration apparatus 100, by switching the four-way switching valve 109 as indicated by a solid line, the refrigerant flows in a direction indicated by an arrow of the solid line. As a result, the high-pressure gas refrigerant discharged from the compressor 104 in the direction of arrow A passes through the four-way switching valve 109, then passes through the gas shutoff valve 133 that is opened, and then enters the indoor heat exchanger 105. The high-pressure gas refrigerant radiates heat while the high-pressure gas refrigerant turns into a high-pressure liquid refrigerant in the indoor heat exchanger 105. The high-pressure liquid refrigerant reaches the expansion valve 106 via the liquid shutoff valve 134 that is opened, and is decompressed by the expansion valve 106. The decompressed refrigerant reaches the outdoor heat exchanger 107, absorbs heat in the outdoor heat exchanger 107, and turns into a low-pressure gas refrigerant. The low-pressure gas refrigerant is suctioned into the compressor 104 via the four-way switching valve 109 and the accumulator 108. During the heating operation, the indoor heat exchanger 105 functions as a radiator, and the outdoor heat exchanger 107 functions as a heat absorber.

On the other hand, during the cooling operation, the flow of the refrigerant is reversed by switching the four-way switching valve 109 as indicated by a dotted line, and the refrigerant flows in a direction indicated by an arrow of the dotted line. As a result, the high-pressure gas refrigerant discharged from the compressor 104 in the direction of arrow A passes through the four-way switching valve 109, and then enters the outdoor heat exchanger 107. The high-pressure gas refrigerant radiates heat while the high-pressure gas refrigerant turns into a high-pressure liquid refrigerant in the outdoor heat exchanger 107. The high-pressure liquid refrigerant reaches the expansion valve 106 and is decompressed by the expansion valve 106. The decompressed refrigerant reaches the indoor heat exchanger 105 via the opened liquid shutoff valve 134, absorbs heat in the indoor heat exchanger 105, and turns into a low-pressure gas refrigerant. The low-pressure gas refrigerant is suctioned into the compressor 104 via the gas shutoff valve 133 that is opened, the four-way switching valve 109, and the accumulator 108. During the cooling operation, the indoor heat exchanger 105 functions as a heat absorber, and the outdoor heat exchanger 107 functions as a radiator.

### [Refrigerant pipe]

As illustrated in FIG. 1, in the refrigeration apparatus 100 of the present disclosure, the refrigerant pipe 110 includes a first pipe 111 and a second pipe 112. The refrigerant pipe 110 further includes a connection portion 120 that connects the first pipe 111 and the second pipe 112. The first pipe 111, the second pipe 112, and the connection portion 120 constitute a part of the refrigerant circuit 103.

The first pipe 111 includes the refrigerant pipe 110 disposed inside the outdoor unit 101 and the refrigerant pipe 110 connecting the outdoor unit 101 and the connection portion 120. The first pipe 111 includes a first liquid refrigerant pipe 111L and a first gas refrigerant pipe 111G. Liquid refrigerant flows through the first liquid refrigerant pipe 111L, and gas refrigerant flows through the first gas refrigerant pipe 111G.

In the refrigeration apparatus 100 of the present disclosure, one of the two connection portions 120 connects the first liquid refrigerant pipe 111L and the second liquid refrigerant pipe 112L, and the other one of the two connection portions 120 connects the first gas refrigerant pipe 111G and the second gas refrigerant pipe 112G. In the refrigerant pipe 110 of the present disclosure, the first pipe 111 and the second pipe 112 are made of stainless steel.

### [Refrigerant pipe and connection portion]

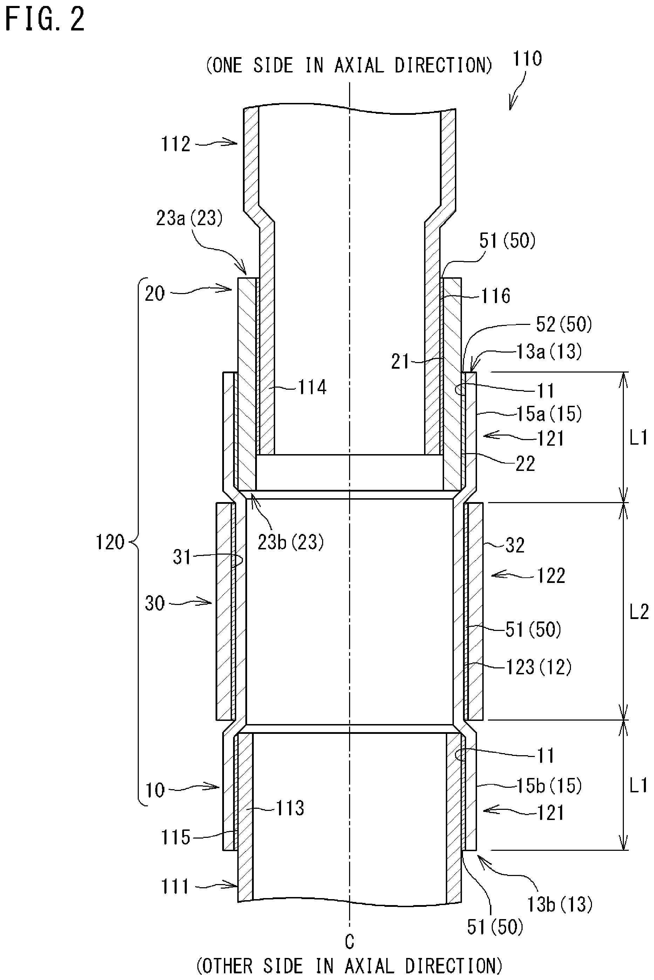

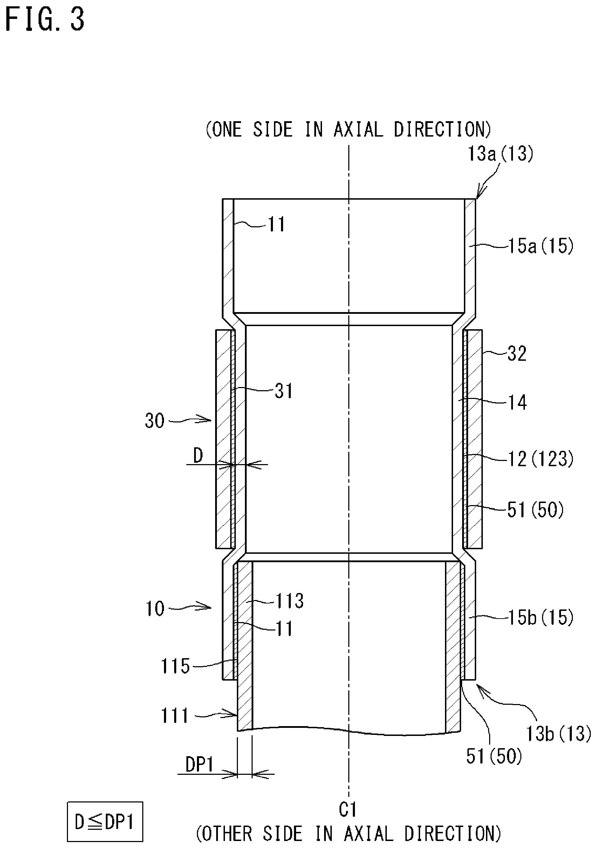

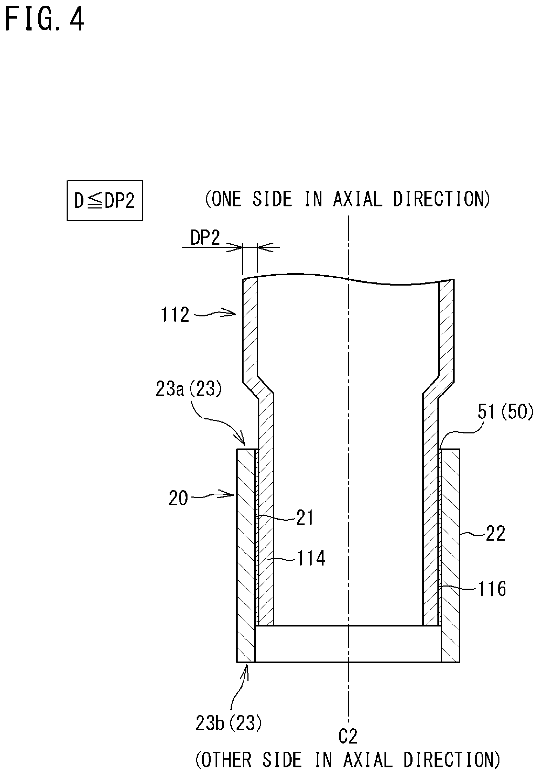

FIG. 2 is a schematic sectional view of the connection portion of the refrigerant pipe according to the embodiment of the present disclosure. FIG. 3 is a schematic sectional view generally illustrating a first pipe and a first connection portion of the refrigerant pipe according to the embodiment of the present disclosure. FIG. 4 is a schematic sectional view generally illustrating a second pipe and a second connection portion of the refrigerant pipe according to the embodiment of the present disclosure. FIG. 2 illustrates the refrigerant pipe 110 of the present disclosure. As illustrated in FIG. 2, the connection portion 120 of the refrigerant pipe 110 of the present disclosure includes a first connection portion 10, a second connection portion 20, and a reinforcing member 30. The first connection portion 10 and the second connection portion 20 of the portions constituting the connection portion 120 are made of a material different from stainless steel. In the present embodiment, the first connection portion 10 and the second connection portion 20 are made of copper. Of the portions constituting the connection portion 120, the reinforcing member 30 is made of metal. In the connection portion 120 according to the present embodiment, the reinforcing member 30 is made of stainless steel. The reinforcing member 30 may be made of a metal other than stainless steel, or may be made of a material other than metal.

Each direction is defined with respect to the refrigerant pipe 110 of the present disclosure. A direction along a central axis C of the refrigerant pipe 110 is an "axial direction". Note that the "axial direction" includes a direction parallel to the central axis C. In the refrigerant pipe 110, one side in the axial direction (upper side in FIG. 2) is an upper side, and the other side in the axial direction (lower side in FIG. 2) opposite to the upper side is a lower side. A direction orthogonal to the central axis C is a "radial direction", and a direction along a circle centered on the central axis C is a "circumferential direction".

As illustrated in FIGS. 2 and 3, the first connection portion 10 is constituted by a cylindrical member, and has an inner peripheral surface 11, an outer peripheral surface 12, an end 13, a straight pipe portion 14, and a flared portion 15. The first connection portion 10 is made of copper. The end 13 includes a first end 13a on one side in the axial direction and a second end 13b on the other side in the axial direction. In the present description, the first end 13a is also referred to as an upper end 13a, and the second end 13b is also referred to as a lower end 13b. The flared portion 15 is a portion disposed at both axial ends of the straight pipe portion 14, and has a larger diameter than the straight pipe portion 14. The flared portion 15 includes a first flared portion 15a formed at the first end 13a and a second flared portion 15b formed at the second end 13b.

The first connection portion 10 is joined to an end 113 of the first pipe 111, for example, by in-furnace brazing. Note that the end 113 of the first pipe 111 is also referred to as the first end 113. The connection portion 120 includes a layer of a brazing material 50 formed between the inner peripheral surface 11 of the first connection portion 10 and the outer peripheral surface 115 of the first end 113. The first connection portion 10 and the first pipe 111 are joined by a layer of the brazing material 50 formed between the inner peripheral surface 11 of the second flared portion 15b and the outer peripheral surface 115. In this description, the layer of the brazing material 50 formed by in-furnace brazing is referred to as a first brazing material layer 51.

As illustrated in FIGS. 2 and 4, the second connection portion 20 is constituted by a cylindrical member, and has an inner peripheral surface 21, an outer peripheral surface 22, and an end 23. The second connection portion 20 is made of copper. Copper is a material having a tensile strength lower than that of stainless steel. The end 23 includes a first end 23a on one side in the axial direction and a second end 23b on the other side in the axial direction. In this description, the first end 23a is also referred to as an upper end 23a, and the second end 23b is also referred to as a lower end 23b.

The second connection portion 20 is joined to an end 114 of the second pipe 112, for example, by in-furnace brazing. Note that the end 114 of the second pipe 112 is also referred to as the second end 114. The connection portion 120 has a layer of the brazing material 50 formed between the inner peripheral surface 21 of the second connection portion 20 and the outer peripheral surface 116 of the second end 114. The second connection portion 20 and the second pipe 112 are joined by the first brazing material layer 51 formed between the inner peripheral surface 21 and the outer peripheral surface 116.

As illustrated in FIGS. 2 and 3, the reinforcing member 30 is constituted by a cylindrical member, and has an inner peripheral surface 31 and an outer peripheral surface 32. The reinforcing member 30 according to the present embodiment is made of stainless steel. The reinforcing member 30 is joined to the outer peripheral surface 12 of the straight pipe portion 14 of the first connection portion 10, for example, by in-furnace brazing. The connection portion 120 has a layer of the brazing material 50 formed between the inner peripheral surface 31 of the reinforcing member 30 and the outer peripheral surface 12 of the first connection portion 10. The reinforcing member 30 and the first connection portion 10 are joined by the first brazing material layer 51 formed between the inner peripheral surface 31 and the outer peripheral surface 12. In other words, in the refrigerant pipe 110 according to the present embodiment, the reinforcing member 30 is made of stainless steel (metal), and is brazed to the first connection portion 10 by the brazing material 50.

As illustrated in FIG. 2, the connection portion 120 is constituted by inserting the second connection portion 20 from the upper side (one side in the axial direction) into the first flared portion 15a on the upper side (one side in the axial direction) of the first connection portion 10, and manually brazing the inner peripheral surface 11 of the first connection portion 10 and the outer peripheral surface 22 of the second connection portion 20 with a burner. The connection portion 120 has a layer of the brazing material 50 formed between the inner peripheral surface 11 of the first connection portion 10 and the outer peripheral surface 22 of the second portion 20. In this description, the layer of the brazing material 50 formed by manual brazing is referred to as a second brazing material layer 52. The first connection portion 10 and the second connection portion 20 are joined by the second brazing material layer 52 formed between the inner peripheral surface 11 and the outer peripheral surface 22. In the connection portion 120 according to the present embodiment, different brazing materials 50 are used for the first brazing material layer 51 and the second brazing material layer 52. Note that the same brazing material 50 may be used for the first brazing material layer 51 and the second brazing material layer 52.

As illustrated in FIG. 2, in the refrigerant pipe 110 according to the present embodiment, the connection portion 120 includes a first portion 121 and a second portion 122. The first portion 121 is a portion that overlaps the first pipe 111 or the second pipe 112 in the radial direction. The second portion 122 is a portion that does not overlap the first pipe 111 and the second pipe 112 in the radial direction. In the connection portion 120, the second portion 122 extends in the axial direction from both axial ends of the first portion 121. In the refrigerant pipe 110 according to the present embodiment, the reinforcing member 30 is disposed so as to cover the outer peripheral surface 123 of the second portion 122 (that is, the outer peripheral surface 12 of the straight pipe portion 14 of the first connection portion 10).

When the second portion 122 not overlapping the first pipe 111 and the second pipe 112 in the radial direction is constituted by only the first connection portion 10 (straight pipe portion 14), there is a concern that the pressure resistance strength is insufficient. In the refrigerant pipe 110 according to the present embodiment, the reinforcing member 30 is disposed radially outside the second portion 122, and thus, the pressure resistance strength of the connection portion 120 in the second portion 122 can be improved.

As illustrated in FIG. 2, in the refrigerant pipe 110 according to the present embodiment, a thickness D in the radial direction of the second portion 122 is equal to or less than a thickness DP1 in the radial direction of the first pipe 111, and is equal to or less than a thickness DP2 in the radial direction of the second pipe 112 (D ≤ DP1 and D ≤ DP2). In other words, in the refrigerant pipe 110 according to the present embodiment, the connection portion 120 having the second portion 122 is configured by using a thin copper pipe. In this case, it is possible to secure the pressure resistance strength of the connection portion 120 while using an inexpensive copper pipe that has been widely used as a refrigerant pipe in the related art. As a result, a manufacturing cost of the refrigerant pipe 110 having improved pressure resistance strength can be suppressed.

The refrigeration apparatus 100 (see FIG. 1) including the refrigerant pipe 110 having such a configuration can use a high-pressure refrigerant such as a single refrigerant made of carbon dioxide or a mixed refrigerant containing carbon dioxide by using the refrigerant pipe 110 in which the pressure resistance strength of the connection portion 120 is improved by the reinforcing member 30.

### [Method of brazing refrigerant pipe]

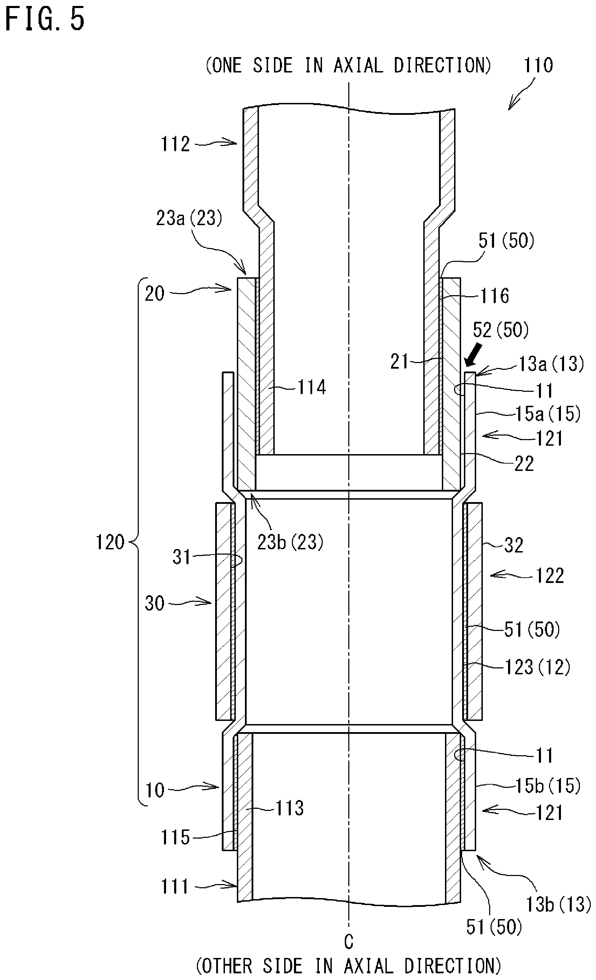

FIG. 5 is a schematic sectional view generally illustrating a status (during brazing) of the connection portion of the refrigerant pipe according to the embodiment of the present disclosure. Here, a method of brazing the connection portion 120 in the refrigerant pipe 110 will be described. As illustrated in FIG. 5, when the refrigerant pipe 110 is brazed, the second connection portion 20 is inserted into the first flared portion 15a of the first connection portion 10 from the upper side (one side in the axial direction), and the first pipe 111 and the second pipe 112 are disposed such that a central axis C1 and a central axis C2 are coaxial. In the refrigerant pipe 110, the central axis C of the refrigerant pipe 110 coincides with the central axis C1 of the first pipe 111 and the central axis C2 of the second pipe 112.

As illustrated in FIGS. 2 and 5, in the refrigerant pipe 110 according to the present embodiment, the second connection portion 20 is connected to the first flared portion 15a. In the refrigerant pipe 110 having such a configuration, when the second connection portion 20 is connected to the first connection portion 10, the second connection portion 20 can be positioned in the axial direction by the flared portion 15 (the first flared portion 15a).

Next, in this state, the molten brazing material 50 is inserted into a gap between the inner peripheral surface 11 and the outer peripheral surface 22, and the second brazing material layer 52 is formed in the gap. Thus, the first pipe 111 including the first connection portion 10 and the second pipe 112 including the second connection portion 20 can be brazed manually.

As illustrated in FIGS. 2 to 5, the refrigerant pipe 110 includes the first pipe 111 made of stainless steel and having the first end 113, the second pipe 112 made of stainless steel and having the second end 114, the first connection portion 10 made of copper and joined to the first end 113, the second connection portion 20 made of copper and joined to the second end 114, the connection portion 120 connecting the first end 113 and the second end 114, and the reinforcing member 30 disposed on the outer peripheral surface 123 of the connection portion 120. The connection portion 120 includes the first portion 121 overlapping the first pipe 111 in the radial direction and the second portion 122 extending upward from the first portion 121 and not overlapping the first pipe 111 and the second pipe 112 in the radial direction.

As shown in FIG. 2, in the refrigerant pipe 110 according to the present embodiment, an axial length L2 of the second portion 122 is larger than an axial length L1 of the first portion 121 (L2>L1). In general, a brazing material used for joining copper pipes is fixed to a copper pipe but is not fixed to a stainless steel pipe. Therefore, in a case where the brazing material that has entered the refrigerant pipe reaches the portion of the stainless steel pipe, the brazing material peeled off from the stainless steel pipe may circulate in the refrigerant circuit, and the refrigeration apparatus can fail. Therefore, the brazing material that has entered the refrigerant pipe needs to be fixed to the copper pipe. The second portion 122 made of copper has a function of fixing the brazing material 50 that has entered the pipe of the refrigerant pipe 110. In the refrigerant pipe 110 according to the present embodiment, the axial length L2 of the second portion 122 is larger than the axial length L1 of the first portion 121, and the axial length L2 of the second portion 122 is sufficiently secured. Thus, the brazing material 50 that has entered the refrigerant pipe 110 can be reliably fixed to the second portion 122. In this case, it is possible to prevent the brazing material 50 that has entered the refrigerant pipe 110 from being diffused in each portion of the refrigerant circuit 103 (see FIG. 1).

As illustrated in FIG. 5, in the method of brazing the refrigerant pipe 110 according to the present embodiment, the inner peripheral surface 11 of the first end 13a on the upper side of the first connection portion 10 and the outer peripheral surface 22 of the second end 23b on the lower side of the second connection portion 20 are brazed in a state where the first pipe 111 is disposed in an orientation in which the first end 113 faces upward and the second pipe 112 is disposed in an orientation in which the second end 114 faces downward. In a case where such a method of brazing is adopted, since the second portion 122 faces a connection surface between the first connection portion 10 and the second connection portion 20, the function of fixing the brazing material 50 to the second portion 122 can be sufficiently exerted. In such a brazing method, it is possible to manually braze the refrigerant pipe 110 made of stainless steel in which the pressure resistance strength capable of using a high-pressure refrigerant such as a single refrigerant made of carbon dioxide or a mixed refrigerant containing carbon dioxide is secured.

In a case where the method of brazing the refrigerant pipe 110 according to the present embodiment is adopted, even if the brazing material 50 enters the inside of the refrigerant pipe 110 from the gap between the first connection portion 10 and the second connection portion 20, the brazing material 50 having entered is fixed to the inner peripheral surface 11 of the second portion 122 located below the gap. Therefore, in the method of brazing according to the present embodiment, the second portion 122 of the connection portion 120 can suppress sagging of the brazing material 50 that has entered the refrigerant pipe 110.

### [Functional effects of embodiments]

(1) The refrigerant pipe 110 according to the present embodiment is the refrigerant pipe 110 that constitutes the refrigerant circuit 103 of the refrigeration apparatus 100 and through which a single refrigerant made of carbon dioxide or a mixed refrigerant containing carbon dioxide flows. The refrigerant pipe 110 includes the first pipe 111 made of stainless steel and having the first end 113, the second pipe 112 made of stainless steel and having the second end 114, the first connection portion 10 made of a material other than stainless steel joined to the first end 113, and the second connection portion 20 made of the same material as the first connection portion 10 and joined to the second end 114. The refrigerant pipe 110 according to the present embodiment includes the connection portion 120 that connects the first pipe 111 and the second pipe 112, and the reinforcing member 30 disposed on the outer peripheral surface 123 of the connection portion 120.
   In the refrigerant pipe 110 having such a configuration, the pressure resistance strength of the connection portion 120 can be improved by the reinforcing member 30. Accordingly, the refrigerant pipe 110 having such a configuration can secure the pressure resistance strength of the stainless steel refrigerant pipe 110 capable of using a high-pressure refrigerant such as a single refrigerant made of carbon dioxide or a mixed refrigerant containing carbon dioxide.
(2) In the refrigerant pipe 110 according to the present embodiment, the connection portion 120 includes the first portion 121 overlapping the first pipe 111 or the second pipe 112 in the radial direction and the second portion 122 extending in the axial direction from the first portion 121 and not overlapping the first pipe 111 and the second pipe 112 in the radial direction. In the refrigerant pipe 110 according to the present embodiment, the reinforcing member 30 is disposed on the outer peripheral surface 123 of the second portion 122.
   The refrigerant pipe 110 having such a configuration can improve the pressure resistance strength of the second portion 122 that does not overlap the first pipe 111 and the second pipe 112 in the radial direction and has low pressure resistance strength.
(3) In the refrigerant pipe 110 according to the present embodiment, the first connection portion 10 and the second connection portion 20 are made of copper, the first connection portion 10 and the second connection portion 20 are joined via the brazing material 50, the first connection portion 10 and the second connection portion 20 are made of copper, and the axial length L2 of the second portion 122 is larger than the axial length L1 of the first portion 121 (L2>L1).
   The second portion 122 made of copper has a function of fixing the brazing material 50 that has entered the pipe of the refrigerant pipe 110. In the refrigerant pipe 110 according to the present embodiment, the axial length L2 of the second portion 122 is larger than the axial length L1 of the first portion 121. Thus, the brazing material 50 that has entered the refrigerant pipe 110 can be reliably fixed to the second portion 122.
(4) In the refrigerant pipe 110 according to the present embodiment, the first connection portion 10 and the second connection portion 20 are made of copper, the thickness D in the radial direction of the second portion 122 is equal to or less than the thickness DP1 in the radial direction of the first pipe 111, and is equal to or less than the thickness DP2 in the radial direction of the second pipe 112 (D ≤ DP1 and D ≤ DP2).
   In the refrigerant pipe 110 having such a configuration, the connection portion 120 including the second portion 122 can be constituted by a thin copper pipe. In this case, it is possible to secure the pressure resistance strength of the connection portion 120 while using an inexpensive thin copper pipe. As a result, a cost of the refrigerant pipe 110 having improved pressure resistance strength can be suppressed.
(5) In the refrigerant pipe 110 according to the present embodiment, the first end 113 is open toward one side in the axial direction in the first pipe 111, and the second end 114 is open toward the other side in the axial direction in the second pipe 112. In the refrigerant pipe 110 according to the present embodiment, the first connection portion 10 has the second portion 122 extending from the first portion 121 to the one side in the axial direction, and the inner peripheral surface 11 on the one side in the axial direction of the first connection portion 10 and the outer peripheral surface 22 on the other side in the axial direction of the second connection portion 20 are joined by the brazing material 50.
   In the refrigerant pipe 110 having such a configuration, the brazing material 50 that has entered the refrigerant pipe 110 from between the inner peripheral surface 11 on the one side in the axial direction of the first connection portion 10 and the outer peripheral surface 22 on the other side in the axial direction of the second connection portion 20 can be fixed to the second portion 122. Accordingly, it is possible to prevent the brazing material 50 that has entered the refrigerant pipe 110 from reaching the first pipe 111 and the second pipe 112 made of stainless steel.
(6) In the refrigerant pipe 110 according to the present embodiment, the first connection portion 10 has the flared portion 15 formed at an end on the one side in the axial direction, and the second connection portion 20 is connected to the flared portion 15.
   In the refrigerant pipe 110 having such a configuration, when the second connection portion 20 is connected to the first connection portion 10, the second connection portion 20 can be positioned by the flared portion 15.
(7) In the refrigerant pipe 110 according to the present embodiment, the reinforcing member 30 is made of metal and joined to the first connection portion 10.
   In the refrigerant pipe 110 having such a configuration, the pressure resistance strength of the connection portion 120 can be improved by the reinforcing member 30. The refrigerant pipe 110 having such a configuration can secure the pressure resistance strength of the stainless steel refrigerant pipe 110 capable of using a high-pressure refrigerant such as a single refrigerant made of carbon dioxide or a mixed refrigerant containing carbon dioxide.
(8) In the refrigerant pipe 110 according to the present embodiment, the reinforcing member 30 is made of stainless steel.
   In the refrigerant pipe 110 having such a configuration, the pressure resistance strength of the reinforcing member 30 can be secured, and accordingly, the pressure resistance strength of the connection portion 120 can be improved.
(9) The refrigeration apparatus 100 according to the present embodiment includes the refrigerant pipe 110.
   The refrigeration apparatus 100 having such a configuration can use a high-pressure refrigerant such as a single refrigerant made of carbon dioxide or a mixed refrigerant containing carbon dioxide by using the refrigerant pipe 110 in which the pressure resistance strength of the connection portion 120 is improved by the reinforcing member 30.
(10) The method of brazing the refrigerant pipe 110 according to the present embodiment is a method of brazing the refrigerant pipe 110 including the first pipe 111 made of stainless steel and having the first end 113, the second pipe 112 made of stainless steel and having the second end 114, the connection portion 120 that includes the first connection portion 10 made of a material other than stainless steel (copper in the present embodiment) and joined to the first end 113 and the second connection portion 20 made of a material other than stainless steel (copper in the present embodiment) and joined to the second end 114, and connects the first end 113 and the second end 114, and the reinforcing member 30 disposed on the outer peripheral surface 123 of the connection portion 120. In the method of brazing the refrigerant pipe 110 according to the present embodiment, the connection portion 120 includes the first portion 121 that overlaps the first pipe 111 in the radial direction, and the second portion 122 that extends upward from the first portion 121 and does not overlap the first pipe 111 and the second pipe 112 in the radial direction, the axial length L2 of the second portion 122 is larger than the axial length L1 of the first portion 121, and the method includes brazing the inner peripheral surface 11 of the upper end 13a of the first connection portion 10 and the outer peripheral surface 22 of the lower end 23b of the second connection portion 20 in a state where the first pipe 111 is disposed in an orientation in which the first end 113 faces upward and the second pipe 112 is disposed in an orientation in which the second end 114 faces downward.

In the method of brazing the refrigerant pipe 110 according to the present embodiment, it is possible to manually braze the refrigerant pipe 110 made of stainless steel in which the pressure resistance strength capable of using a high-pressure refrigerant such as a single refrigerant made of carbon dioxide or a mixed refrigerant containing carbon dioxide is secured. In the method of brazing the refrigerant pipe 110 having such a configuration, the second portion 122 can suppress sagging of the brazing material 50 that has entered the refrigerant pipe 110.

While the embodiments have been described above, it will be understood that various changes in forms and details can be made without departing from the gist and scope of the claims.

### REFERENCE SIGNS LIST

10 first connection portion
11 inner peripheral surface
12 outer peripheral surface
13 end
15 flared portion
20 second connection portion
22 outer peripheral surface
23 end
30 reinforcing member
50 brazing material
100 refrigeration apparatus
103 refrigerant circuit
110 refrigerant pipe
111 first pipe
112 second pipe
113 first end
114 second end
120 connection portion
121 first portion
122 second portion
123 outer peripheral surface
L1 axial length (of first connection portion)
L2 axial length (of second connection portion)
D thickness (of second portion) in radial direction
DP1 thickness (of first connection portion) in radial direction
DP2 thickness (of second connection portion) in radial direction

## Claims

1. A refrigerant pipe (110) is a refrigerant pipe (110) that constitutes a refrigerant circuit (103) of a refrigeration apparatus (100) and through which a single refrigerant consisting of carbon dioxide or a mixed refrigerant including carbon dioxide flows, the refrigerant pipe (110) comprising:
a first pipe (111) made of stainless steel and having a first end (113);
a second pipe (112) made of stainless steel and having a second end (114); and
a connection portion (120) that includes a first connection portion (10) made of a material other than stainless steel and joined to the first end (113), and a second connection portion (20) made of a same material as the first connection portion (10) and joined to the second end (114), and connects the first end (113) and the second end (114), wherein
the connection portion (120) includes a reinforcing member (30) disposed on an outer peripheral surface (123) of the connection portion (120).

2. The refrigerant pipe (110) according to claim 1, wherein
the connection portion (120) includes a first portion (121) that overlaps the first pipe (111) or the second pipe (112) in a radial direction, and a second portion (122) that extends from the first portion (121) in an axial direction and does not overlap the first pipe (111) and the second pipe (112) in the radial direction, and
the reinforcing member (30) is disposed on the outer peripheral surface (123) of the second portion (122).

3. The refrigerant pipe (110) according to claim 2, wherein
the first connection portion (10) and the second connection portion (20) are made of copper, and
the first connection portion (10) and the second connection portion (20) are joined via a brazing material (50), and
an axial length (L2) of the second portion (122) is larger than an axial length (L1) of the first portion (121).

4. The refrigerant pipe (110) according to claim 2, wherein
the first connection portion (10) and the second connection portion (20) are made of copper, and
a thickness (D) of the second portion (122) in the radial direction is equal to or less than a thickness (DP1, DP2) of the first pipe (111) and the second pipe (112) in the radial direction.

5. The refrigerant pipe (110) according to claim 3, wherein
in the first pipe (111), the first end (113) is open toward one side in the axial direction,
in the second pipe (112), the second end (114) is open toward another side in the axial direction,
the first connection portion (10) includes the second portion (122) extending from the first portion (121) to the one side in the axial direction, and
an inner peripheral surface (11) on the one side in the axial direction of the first connection portion (10) and an outer peripheral surface (22) on the another side in the axial direction of the second connection portion (20) are joined by the brazing material (50).

6. The refrigerant pipe (110) according to claim 1 or 2, wherein
the first connection portion (10) has a flared portion (15) formed at an end on the one side in the axial direction, and
the second connection portion (20) is connected to the flared portion (15).

7. The refrigerant pipe (110) according to claim 1 or 2, wherein the reinforcing member (30) is made of metal and is joined to the first connection portion (10).

8. The refrigerant pipe (110) according to claim 7, wherein the reinforcing member (30) is made of stainless steel.

9. A refrigeration apparatus (100) comprising the refrigerant pipe (110) according to claim 1 or 2.

10. A method of brazing a refrigerant pipe (110) including
a first pipe (111) made of stainless steel and having a first end (113),
a second pipe (112) made of stainless steel and having a second end (114),
a connection portion (120) that includes a first connection portion (10) made of a material other than stainless steel having a tensile strength smaller than a tensile strength of stainless steel and joined to the first end (113) and a second connection portion (20) made of the material other than stainless steel and joined to the second end (114), and connects the first end (113) and the second end (114), and
a reinforcing member (30) disposed on an outer peripheral surface (123) of the connection portion (120),
the connection portion (120) includes
a first portion (121) that overlaps the first pipe (111) in a radial direction, and a second portion (122) that extends upward from the first portion (121) and does not overlap the first pipe (111) and the second pipe (112) in the radial direction,
an axial length (L2) of the second portion (122) is larger than an axial length (L1) of the first portion (121), and
the method includes brazing an inner peripheral surface (11) of an upper end (13a) of the first connection portion (10) and an outer peripheral surface (22) of a lower end (23b) of the second connection portion (20) in a state where the first pipe (111) is disposed in an orientation in which the first end (113) faces upward and the second pipe (112) is disposed in an orientation in which the second end (114) faces downward.
